# EUROPEAN PATENT APPLICATION

(11) **EP 1 036 512 A1**
(43) Date of publication of application: **20.09.2000**
(21) Application number: 99200791.4
(22) Date of filing: 16.03.1999
(51) Int. Cl.: A23N 17/02, A23N 17/00

(54) **Eliminating salmonella in feed milling industry**

(71) Applicant: CPM/Europe B.V., 1031 HD Amsterdam (NL)
(72) Inventor: Alperliefste, Paul Renze, 1991 JN Velzerbroek (NL)

(57) **Abstract**

The invention describes a means of eliminating potential dangerous bacteria such as Salmonella out of a mash product such as compound feed as applied in the feed milling industries by heat treatment. The invention makes use of the known characteristics of various bacteria to be sensitive for exposure to heat over a certain time. The invention covers the combination, use, and control of known machinery in the feed milling industries but also a new application for a screw conveyor as heat reactor barrel and barrel mixer as drying and cooling apparatus for the heat treated mash product such as compound feed. The invention provides means to have absolute control over the applied product temperature, time of exposure to subject temperature and moisture content in the product after the cooling means, relative to the moisture in the product at the beginning of the process. The invention makes it possible to conduct a heat treatment of animal feed in such way that a true hygienic feed production can be realised, close to food grade standards.

## Description

The invention relates to a means of eliminating potential dangerous bacteria such as Salmonella out of a mash product such as compound feed applied with in the feed milling industries by heat treatment. The invention makes use of the known characteristics of various bacteria to be sensitive for exposure to heat over a certain time. The invention covers the combination, use, and control of known machinery in the feed milling industries but also a new application for a screw conveyor as heat reactor barrel and barrel mixer as drying and cooling apparatus for the heat treated mash product such as compound feed. The invention provides means to have absolute control over the applied product temperature, time of exposure to subject temperature and moisture content in the product after the cooling means, relative to the moisture in the product at the beginning of the process. The invention makes it possible to conduct a heat treatment of animal feed in such way that a true hygienic feed production can be realised, close to food grade standards.

Heating, drying and cooling of compound feed is a commonly used process in the feed milling industries. The compound feed is normally heated in barrel mixers by adding steam, which condenses on the product flowing through the barrel mixer. While the condensing steam is heating up the product in the mixer, it also increases the moisture content of the product, relative to the steam quantity applied per unit product in the mixer. To allow sufficient time for the steam to condense on the product and allow sufficient time for the product to absorb the condense into the various product particles various known process concepts are in use like stacking barrel mixers to increase the total mixer volume, means to manipulate the filling percentage by feed in the effective volume of a barrel mixer by controlling the product flow at the outlet of the barrel mixer to make optimal use of the available mixer volume and directing the feed after a barrel conditioner into a high volume reactor vessel which performs as a buffer in the product stream and thus provides additional process time. The heat treated product is then directed to a drying and cooling means which can be a horizontal positioned band dryer/cooler or a vertically positioned side stream or counterflow stream dryer/cooler. The product is conveyed through the dryer/cooler with a certain product layer thickness over a certain time while being exposed to ambient air forced through the product layer at a certain quantity, sufficient to absorb water evaporated out of the product and thus drying the product and cooling the product by confection without exceeding a certain airspeed which would transport product particles in the air stream. The ambient air is forced through the product layer by means of a pressure differential over the product layer as a result of an air fan.

A known disadvantage of the applied barrel mixers for eliminating potential dangerous bacteria such as Salmonella is the variation in product temperature between the inlet and outlet of subject barrel mixer. Besides that, there is no guarantee that product particles going first in the barrel mixer are the first product particles going out of the mixer. The result is little accuracy to the required product temperature and required exposure time of the product. An other disadvantage of the applied barrel mixers and high volume reactor vessels is that at the end of a product run, product remains in the process components due usability of conveying the remains adequately and building up of fine particles in the wet spots due to condensation on the wall of described components.

A known disadvantage of the applied product dryer/coolers is the de-mixing of the product formulation due to the variation in product particle sizes and the drying/cooling air passing through the product layer separating the lighter particles from the heavier particles. At counter flow coolers working in drying/cooling stages by evacuating the product as a batch from one dryer/cooler level to a lower level, the de-mixing can be so intense that a separate batch mixer after the dryer/cooler has to homogenise the formulation again. The batch handling while drying and cooling the heat-treated material does not allow to control the moisture content in the product evacuated from the dryer/cooler accurately. An other disadvantage of the known cooler concepts is the condensation that occurs in the cooler the moment relatively warm air comes in contact with relative cold dryer/cooler parts. Fine product particles can stick and build up in the wet spots that occur due to described condensation. Heat isolation of the relevant cooler parts has proven to be insufficient to eliminate this problem. Specifically horizontal belt type coolers are difficult to clean. A general disadvantage of machines that build up dirt is that they have to be opened for cleaning purposes regularly which thus enhances the risk for contamination by dust particles carrying potential dangerous bacteria such as Salmonella.

The invention overcomes described disadvantages by heating of the product in a steam jacketed barrel mixer by adding steam and condensing the added steam on the product particles flowing through the mixer after which the thus heated product is directed into a steam jacketed screw conveyor which holds the product over a required period in time at a constant temperature while conveying it to the inlet of the product cooler. With described means, all product particles will be heated to the same temperature and exposed to that temperature for the same duration in time because the actual heat exposure time starts at the inlet of the steam jacketed screw conveyor and a screw conveyor has the characteristic of product that enters first, will be evacuated first which means there is no mixing of product particles taking place while being conveyed by the screw conveyor. In the screw conveyor barrel a screw conveyor shaft is mounted featuring solid flights which fits accurately in the inner diameter of the conveyor barrel which results into a product volume which moves forward as a single volume with a certain mass, relative to the specific volume entities of the product and actual filling percentage of the maximum available barrel conveyor volume. The duration time the product is exposed to the required temperature relates to the time it takes to transport product particles from the barrel conveyor inlet to the conveyor out which is a relation between the length of the barrel conveyor, the flight pitch of the conveyor screw and the revolving speed of the conveyor screw. The steam jacket prevents condensation on the internal screw conveyor wall and compensates for heat loss due to radiation into the air surrounding the barrel conveyor. The product arriving at the outlet of the barrel screw conveyor is directed to a barrel type product cooler.

The invention of jacketed barrel type dryer/cooler to be used in combination of a conventional dryer/cooler, overcomes the described cooler disadvantages by bringing the product into a floating stage by means of agitating the product by beaters and at the same time convey the floating product from the barrel cooler inlet to the barrel cooler outlet. An air stream is pulled through the barrel dryer/cooler in a counterflow direction to the product flow and dries the product by absorbing the moist evaporated by the product particles and also cools the product by confection of heat energy out of the product particles. The cooling process in the invented barrel dryer/cooler is a continuous process which eliminates de-mixing of product formulations which is a disadvantage of described known counterflow cooling concepts. The invented barrel cooler is a steam jacketed barrel which prevents condensation of cooling air floating along side the barrel and thus in combination with the beating action the inner surface of the barrel dryer/cooler is kept absolutely clean. This overcomes the described condensation difficulties as described at know cooler concepts. The jacketed cooler barrel also exchanges heat energy to the cooling air floating alongside the jacketed barrel and therefore increases the temperature of the cooling air which can then absorb more moist being evaporated by the product particles being conveyed through the cooler barrel. The result of bringing the product flowing through the barrel cooler in a floating stage by beaters and forcing drying and cooling air in a counterflow direction through the barrel cooler, is a much better contact between product particles and surrounding air which results into a more efficient drying and cooling function then can be achieved with the described known cooling concepts. Drying and cooling efficiency is expressed in required drying and cooling air quantities and duration time of the product in the dryer/cooler in relation to product volumes, temperatures and moisture content requirements of the product in a cooler as well as energy requirements for obtaining sufficient pressure differences over the product layer to transport the required air quantity.

The dried and cooled product is evacuated from the barrel dryer/cooler into a conventional cooler to obtain the final moist content and temperature in the product before evacuating the conventional cooler to a product silo. The moisture content and temperature in the product being evacuated from the barrel dryer/cooler into a conventional cooler is reduced to such extent that the described disadvantages for conventional dryer/coolers are eliminated. Also counterflow coolers can apply the first in, first out principle again and be operated to evacuate the product continuously to a product silo without suffering from the described disadvantages of a counterflow cooler.

The invention is described below by means of a single flow diagram where the various required process components are displayed. In the diagram only the components required to understand the invention are displayed, while an outline of other components is displayed because a knowledgeable individual will understand the actual execution of constructions and other process components. The partly drawn heat treatment installation in the diagram starts with a product bunker 1 for storage of raw materials on top of a variable speed screw conveyor 2 which provides means of dosing the required quantity of feed to jacketed barrel mixer 4 where steam is added to the product to achieve the required temperature of the product.

The product is then directed to the inlet of the barrel screw conveyor 5 that conveys the product at a certain speed to the outlet of the barrel conveyor. If the product temperature at the outlet of the barrel conveyor is not in accordance with the demanded tolerances, the controller will operate two-way valve 12 to direct the non conform the requirements treated feed to a container until the product temperature at he outlet of the barrel conveyor comes with the requirements again, after which the controller operates the two-way valve 12 again which then directs the product to the jacketed barrel cooler 7.
The drying and cooling airflow is forced through the barrel cooler counter current to the product flow in the barrel cooler 7. At the inlet of the barrel cooler a rotary valve 6 is installed to prevent air from drawn into the barrel cooler inlet where also the product is entering the barrel cooler. Product evacuating the barrel cooler 7 enters a conventional cooler 8 to allow optimum sizing of the barrel cooler 7 and control of the quantity of drying and cooling air by means of air flow control valves 15 and 19 which provides means for an adequate control of moisture in the product evacuating the cooler, directed to a product storage silo.

The required drying and cooling air passes inlet air filter 10 to prevent recontamination of heat treated product in the cooler by possible contaminated dust particles transported in the ambient air surrounding the cooler. The drying and cooling air being evacuated from the cooler passes dust-separating elements like a cyclone 17 and a dust filter 16 before being exhaust into the ambient air.

All process components which come in contact with product during normal operation are preheated to eliminated possible contamination in the system by hot air being pulled through the system by the drying and cooling air fan 14. The air required for preheating the system passes an air filter 21 flowing to the heat exchanger 11 before it enters the system through air valve 3 after which the preheat air passes the jacket mixer and enters the conventional cooler inlet by opening air valve 13 and closing air valve 9. From the conventional cooler, the preheat air can enter the jacketed barrel cooler by opening air volume control valve 19 and closing air valve 18 after which the preheat air can be evacuated into the ambient air. After all equipment reaches the required temperature the actual heat treatment process can start.

At the end of a product run through the system, described preheat cycle is being used for drying the system which prevents condensation can take place at the moment the various components in the system cool down.

The invented system can be vacuum cleaned after a product run by pulling a large air quantity by means of the drying and cooling air fan 14 through the various process components which results into high air speeds in the jacketed barrel mixer 4, the jacketed barrel conveyor 5 and jacket barrel cooler 7, sufficient to transport all the possible remaining small product particles in the system to the dust separating elements 17 and 16. To operate the vacuum clean function, drying and cooling fan 14 needs to run while air volume regulating valve 15 and 19 needs to be open and air valve 18 needs to be closed and air valve 13 is closed while two-way valve 12 directs air to two-way valve 20 which directs air to the by-pass over the rotary valve 6 and air valve 3 is opened to allow fresh air to enter the system what automatically seals off the outlet of feeder screw 2 while the exhaust air passes the dust separating elements 17 and 16.

Dividing the total applied drying and cooling air over the conventional dryer/cooler and barrel dryer/cooler provides an adequate means of manipulating the moisture content in the product being evacuated at described heat treatment process. The quantity added moisture to the product by condensing steam on the product in the jacketed mixer can be measured by known mass flow meters while the total evaporated moist out of the product during the drying/cooling stage can be measured by the difference in absorbed moist in the ambient air expressed as a certain mass unit water per mass unit air which enters the dryer/cooler and the absorbed moist in the air evacuated from the dryer/cooler. The difference between added moisture in the barrel mixer and evaporated moisture at the dryer/cooler allows a moisture balance calculation. Based on the outcome of describe moisture balance calculation a decision can be made to enhance or reduce the drying function of the barrel dryer/cooler by manipulating the air quantity being pulled through the barrel dryer cooler by means of air regulating valve 18 and thus the moisture content in the product being evacuated at the conventional cooler outlet can be changed.

Evidently, the possibility exists to perform the complete drying and cooling function in the system by the jacket barrel cooler at the correct sizing of subject barrel cooler in relation to product throughput flowing through the barrel cooler expressed in a certain tonnage per hour and moisture quantity to be evaporated expressed in a certain percentage of the product throughput and product temperature difference between barrel cooler inlet and barrel cooler outlet and maximum allowed air speed in the barrel cooler expressed into a certain speed unit to prevent transport of fine product particles in the air stream.

Also a second barrel cooler can be installed to enhance the total time the product can be held into a barrel cooler and allow most of the required cooling action by heat confection from product particles to surrounding cooling air in the second barrel cooler. This alternative also allows increasing total air volumes to be applied at a similar air speed through each individual cooler barrel if the total airflow is equally divided over the cross sections of both barrel coolers.

The invention is not limited to describe alternative constructions that can be changed in a number of ways with in the limitations of the claims. Besides, simple known components in the feed milling industries can be used to realise described heat treatment concept that applied in the described invented method is with in the limitations of the claim.

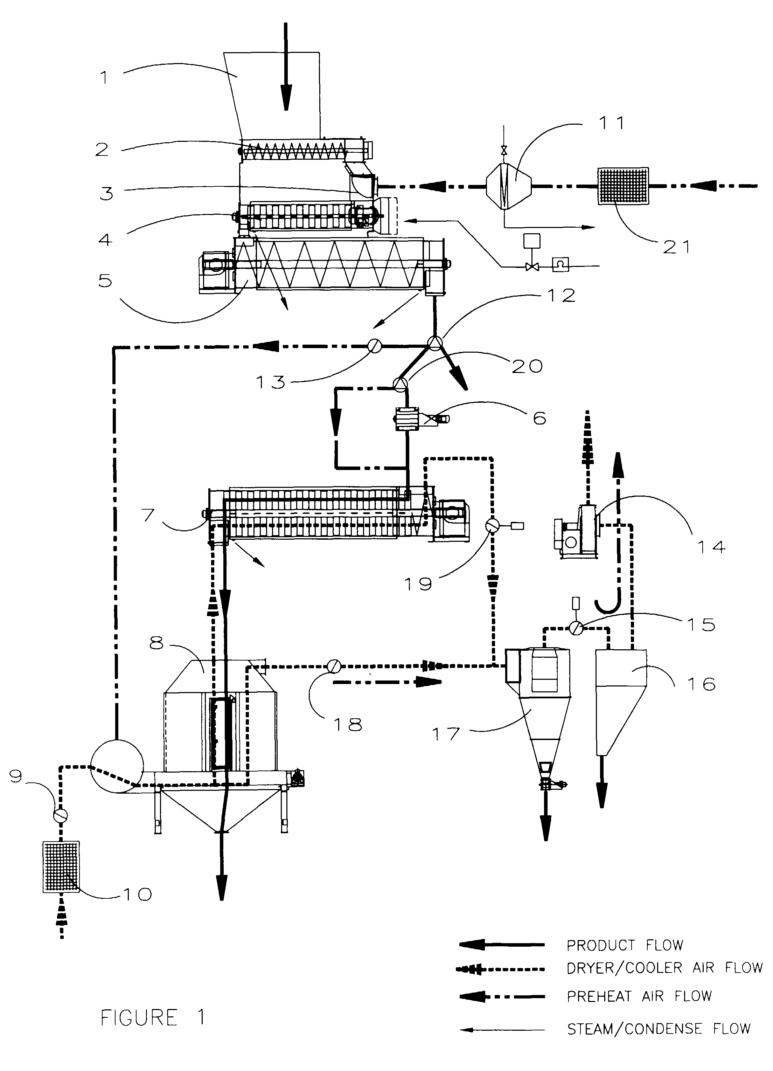

## Claims

1. The combination, use, and control of known machinery in the feed milling industries with the objective of eliminating potential dangerous bacteria such as Salmonella by heat treating a mash product such as compound feed product particles to a certain temperature and exposure to that temperature for a certain duration in time by using a screw conveyor as heat reactor barrel and barrel mixer as drying and cooling apparatus for the heat treated material.

2. The process according claim 1, with the capability of controlling the moist in the product being evacuated from the conventional cooler outlet by means of controlling the drying and cooling air quantities through the steam jacketed barrel dryer/cooler as a result of measuring the total absorbed moist by the drying and cooling air being evacuated from the cooler air outlets and the known moist addition by means of steam in the jacketed mixer.

3. The use of a conveyor screw as heat reactor to a mash product such as compound feed applied in the feed milling industries with the objective to eliminated dangerous bacteria such as Salmonella, making use of the known screw conveyor characteristic that product that enters first will be evacuated first, which means there is no mixing of product particles taking place while being conveyed by the screw conveyor and all feed compound product will be exposed to the required temperature for the same duration in time.

4. The use of a steam jacketed barrel conveyor for the heat treatment of a mash product such as compound feed applied in the feed milling industries with the objective to prevent condensation of moist can take place on the inner surface of the barrel conveyor and heat loss to the surrounding ambient air can be compensated which results in a hygienic heat reactor for the mash product such as compound feed as processed in the feed milling industries.

5. The use of a steam jacketed barrel mixer as a dryer/cooler by pulling drying and cooling air through the jacketed barrel mixer, counterflow to the product flow through the barrel mixer.

6. Steam jacketed barrel mixer according claim 4, to be used in the feed milling industries to dry and cool heat-treated mash product such as compound feed.

7. Steam jacketed barrel mixer according claim 4, to be used in combination with conventional cooler concepts with the objective to reduce the humidity and temperature in the product before entering the product in the conventional cooler which results into a reduction of condensation of water in the drying and cooler air which comes in contact with the walls of the conventional cooler.

8. Steam jacketed barrel mixer according claim 4, sized in such way that the full drying and cooling requirements for the product flowing through can be achieved by a single barrel dryer/cooler.

9. Steam jacketed barrel mixer according claim 4, stacked in such quantities on top of one another that it meets the objective of enhancing the effective product holding capacity of the total barrel dryer/cooler which enhances the available drying and cooling duration in time in relation to the throughput of product flowing through the barrel dryer/cooler.

10. Steam jacketed barrel mixer according claim 4, positioned parallel to one another in such quantities that it meets the objective of total air quantities to contact the total product throughput flowing through the total number of barrel dryer/cooler though limiting the maximum drying and cooling air speed through each individual barrel dryer/cooler.
